# EUROPEAN PATENT APPLICATION

(11) **EP 2 308 914 A1**
(43) Date of publication of application: **13.04.2011**
(21) Application number: 09802822.8
(22) Date of filing: 02.07.2009
(51) Int. Cl.: C08G 64/08, C08G 64/16

(54) **POLYCARBONATE DIOL AND POLYCARBONATE DIOL COPOLYMER**

(30) Priority: 01.08.2008 JP 2008199565; 06.02.2009 JP 2009025636
(71) Applicant: Ube Industries, Ltd., Ube-shi Yamaguchi 755-8633 (JP)
(72) Inventor: WATANABE, Masahiko, Ube-shi Yamaguchi 755-8633 (JP)
(74) Representative: Gille Hrabal Struck Neidlein Prop Roos
(86) International application number: PCT/JP2009/062129
(87) International publication number: WO 2010/013579

(57) **Abstract**

The invention provides a polycarbonate diol and a polycarbonate diol copolymer each having excellent mechanical performance, hydrolysis resistance, etc. and exhibiting excellent industrial productivity. The polycarbonate diol includes a repeating unit represented by formula (1), and the polycarbonate diol copolymer includes a repeating unit represented by formula (1) and a repeating unit represented by formula (3): 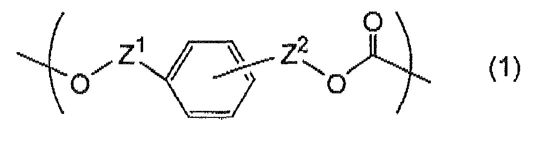 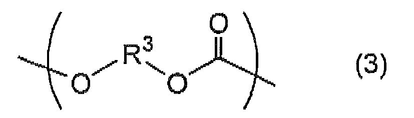 (wherein each of Z¹ and Z² represents a C1 to C10 linear or branched alkanediyl group).

## Description

### Technical Field

The present invention relates to a polycarbonate diol including a specific repeating unit, and to a polycarbonate diol copolymer including a specific repeating unit.

### Background Art

Similar to the case of polyester polyol or polyether polyol, polycarbonate diol is useful as a raw material for producing polyurethane resins and urethane acrylates through reaction with a polyisocyanate compound, or as a raw material for, for example, engineering plastics, adhesives, or coating materials. Also, polycarbonate diol is used as a modifier for, for example, polyester. When a urethane resin is produced from a polyester polyol, due to ester bonds of the polyester polyol, the urethane resin poses a problem of poor hydrolysis resistance. Meanwhile, when a polyurethane resin is produced from a polyether polyol, due to ether bonds of the polyether polyol, the polyurethane resin poses a problem of poor weatherability and heat resistance.
In contrast, polycarbonate diol, which includes a repeating unit represented by the formula -[O-R-O(CO)]-(wherein R represents a divalent hydrocarbon group), does not cause the aforementioned problem. Thus, polyurethane or an engineering plastic material is industrially readily produced from a polycarbonate diol, and the thus-produced polyurethane or engineering plastic material is advantageous in that it exhibits excellent hydrolysis resistance, weatherability, heat resistance, etc.

For further improvement of the mechanical strength, heat resistance, weatherability, etc. of, for example, an engineering plastic material produced from a polycarbonate diol, Patent Document 1 proposes a method for producing an aromatic polycarbonate diol having phenolic hydroxyl groups on both ends thereof by use of HO-Ar-OH (wherein Ar represents an aromatic compound residue).
However, as described in Non-Patent Document 1, generally, the reaction rate of a phenolic hydroxyl group with an isocyanate group is much lower than that of an alcoholic hydroxyl group with an isocyanate group, and therefore an aromatic polycarbonate diol having terminal phenolic hydroxyl groups is not suitable as a raw material for producing polyurethane.

Patent Document 1: Japanese Patent Application Laid-Open (*kokai*) No. H02-251523
Non-Patent Document 1: Kentaro Shima, "Basics and Application of Functional Polyurethane," published by CMC Publishing Co., Ltd., 2000

### Disclosure of the Invention

### Problems to be Solved by the Invention

An object of the present invention is to provide a polycarbonate diol and polycarbonate diol copolymer having excellent mechanical performance, hydrolysis resistance, etc. and exhibiting excellent industrial productivity.

### Means for Solving the Problems

The present invention has been accomplished for achieving the aforementioned object, and the invention provides the following [1] and [2].
[1] A polycarbonate diol including a repeating unit represented by the following formula (1);

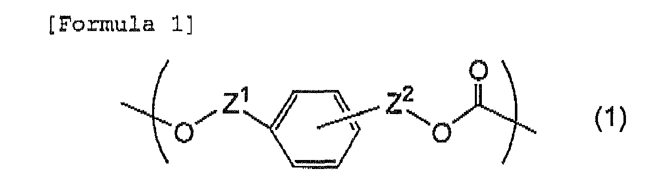

(wherein each of Z¹ and Z² represents a C1 to C10 linear or branched alkanediyl group).
[2] A polycarbonate diol copolymer including a repeating unit represented by the following formula (1) and a repeating unit represented by the following formula (3):

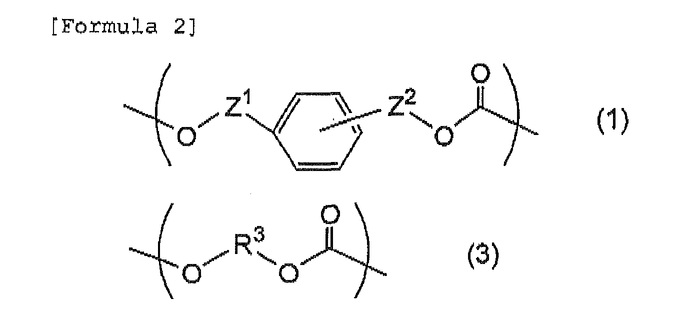

(wherein Z¹ and Z² have the same meanings as defined above; and R³ represents a C3 to C20 divalent aliphatic hydrocarbon group optionally having a substituent, or a C30 to C50 divalent alicyclic and/or aromatic hydrocarbon group optionally having a substituent, excepting the case where the repeating unit of formula (1) is identical to the repeating unit of formula (3)).

### Effects of the Invention

The polycarbonate diol and polycarbonate diol copolymer of the present invention exhibit excellent mechanical performance, hydrolysis resistance, heat resistance, weatherability, UV shielding property, etc. Therefore, when a polyurethane resin or a polycarbonate resin is produced from the diol or the diol copolymer, the resultant resin exhibits excellent mechanical performance, heat resistance, weatherability, and UV shielding property.
The polycarbonate diol and polycarbonate diol copolymer of the present invention are less likely to be colored and exhibits excellent industrial productivity. Therefore, the diol or the diol copolymer are suitable as raw materials for producing, for example, polyurethane resin or polycarbonate resin.

### Best Modes for Carrying Out the Invention

### <polycarbonate diol>

The polycarbonate diol of the present invention (hereinafter may be referred to simply as "the polycarbonate diol") is characterized by including a repeating unit represented by the following formula (1).

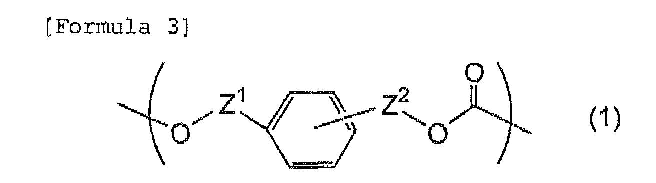

In formula (1), each of Z¹ and Z² represents a C1 to C10 linear or branched alkanediyl group.
Examples of the alkanediyl group include ethylene, ethylene, trimethylene, propane-1,2-diyl, tetramethylene, butane-1,3-diyl, tetramethylene, butane-1,3-diyl, pentamethylene, hexamethylene, heptamethylene, octamethylene, decamethylene, and 1-octamethylene. Of these, a C1 to C4 linear or branched alkanediyl group is preferred.
Preferably, Z¹ and Z² are located at 1,4-positions (p-form) or 1,3-positions (m-form), more preferably at 1,4-positions (p-form).
A particularly preferred polycarbonate diol is represented by the following formula (2).

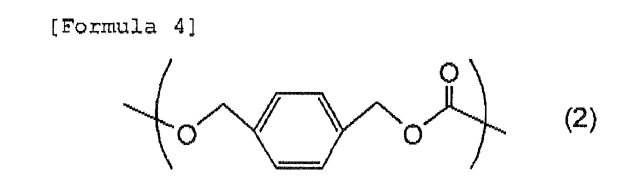

From the viewpoints of mechanical performance, hydrolysis resistance, heat resistance, and weatherability of the polycarbonate diol, as well as applicability of the diol to a variety of fields, for example, the number of repeating units of the diol represented by formula (1) or (2), or the number average molecular weight of the diol is determined as described below.
The number of repeating units represented by formula (1) or (2) is preferably 1 to 18, more preferably 2 to 13.
The polycarbonate diol preferably has a number average molecular weight of 200 to 3,000, more preferably 300 to 2,000, much more preferably 400 to 1,000. When the number average molecular weight is excessively high, the melting point of the polycarbonate diol becomes high, and difficulty may be encountered in handling the diol, whereas when the number average molecular weight is excessively low, the number of carbonate bonds is reduced, and the polycarbonate diol may encounter difficulty in exhibiting its properties.

The polycarbonate diol may be produced through a known method such as the carbonate ester method or the phosgene method by reacting an aromatic diol compound with, for example, a carbonate ester or phosgene. Among the aforementioned methods, the carbonate ester method is preferably employed.
The carbonate ester method employed is preferably, for example, the following production method A.
In production method A, as shown in the following reaction scheme, an aromatic dihydroxyl compound (a) and a carbonate ester (b) are reacted by transesterification with or without a catalyst, to thereby produce a polycarbonate diol (c).
Production method A will now be described by taking, as an example, the case where reaction is performed by using 1,4-benzenedimethanol as an aromatic dihydroxyl compound. However, the method may also be carried out in a manner similar to that described above by use of another aromatic dihydroxyl compound.

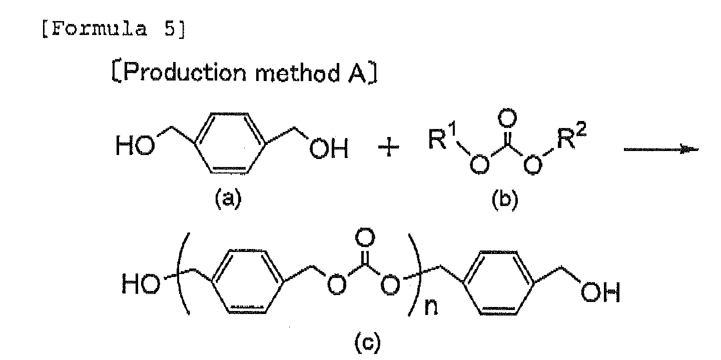

In the aforementioned reaction scheme of production method A, each of R¹ and R² preferably represents a C1 to C6 hydrocarbon group optionally having a substituent, and n represents the number of repeating units (preferably 1 to 18, more preferably 2 to 13).
In production method A, an alcohol derived from the carbonate ester (b) (e.g., R¹OH or R²OH) is by-produced during transesterification reaction. Therefore, preferably, reaction is allowed to proceed while the thus-produced alcohol is removed through, for example, distillation. In production method A, the carbonate ester (b) may be replaced with an alkylene carbonate such as ethylene carbonate. In this case, a glycol derived from such an alkylene carbonate is by-produced, and therefore, preferably, reaction is allowed to proceed while the thus-produced glycol is removed through, for example, distillation.
The aromatic dihydroxyl compound (a), the carbonate ester (b), and transesterification reaction will be described in detail hereinbelow.

### <Polycarbonate diol copolymer>

The polycarbonate diol copolymer of the present invention (hereinafter may be referred to simply as "the polycarbonate diol copolymer") is characterized by including a repeating unit represented by the following formula (1) and a repeating unit represented by the following formula (3). When the repeating unit of the following formula (1) is identical to the repeating unit of the following formula (3), the resultant product is not regarded as the polycarbonate diol copolymer, since the product has the same structure as the aforementioned polycarbonate diol.

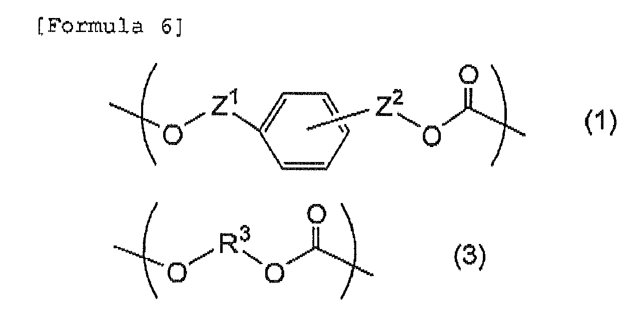

In formula (1), Z¹ and Z² have the same meanings as defined above.
In formula (3), R³ represents a C3 to C20 divalent aliphatic hydrocarbon group optionally having a substituent, or a C30 to C50 divalent alicyclic and/or aromatic hydrocarbon group optionally having a substituent. More specifically, the hydrocarbon group of R³ may have a substituent which does not participate in urethane formation reaction, and the hydrocarbon group may include, in carbon chains thereof, for example, a hetero atom, an ester bond, an alicyclic structure, or an ether bond.
The hydrocarbon group of R³ is preferably a C3 to C14 linear or branched alkanediyl group, or a C32 to C46 divalent alicyclic and/or aromatic hydrocarbon group.
In the polycarbonate diol copolymer, the molar ratio of (repeating units of formula (1)) to (repeating units of formula (3)) is preferably 1/9 to 9/1, more preferably 1/5 to 5/1, much more preferably 1/3 to 3/1.

From the viewpoints of mechanical performance, hydrolysis resistance, heat resistance, and weatherability of the polycarbonate diol copolymer, as well as applicability of the copolymer to a variety of fields, for example, the number of repeating units of the copolymer represented by formula (1) or (3), the amount of each type of repeating units incorporated in the copolymer, or the number average molecular weight of the copolymer is determined as described below.
Repeating units of formula (1) and repeating units of formula (3) may be block-copolymerized or randomly copolymerized.
The number of repeating units of formula (1) is preferably 1 to 20, more preferably 2 to 15. The amount of the repeating units incorporated in the polycarbonate diol copolymer is preferably 10 to 90 mol%, more preferably 25 to 75 mol%.
The number of repeating units of formula (3) is preferably 1 to 30, more preferably 2 to 20. The amount of the repeating units incorporated in the polycarbonate diol copolymer is preferably 10 to 90 mol%, more preferably 25 to 75 mol%.
The polycarbonate diol copolymer of the present invention preferably has a number average molecular weight of 200 to 3,000, more preferably 300 to 2,000, much more preferably 900 to 1,500.

The polycarbonate diol and polycarbonate diol copolymer of the present invention preferably have a Hazen color number (APHA) specified by JIS K 1557 of 200 or less, more preferably 100 or less, much more preferably 70 or less, particularly preferably 1 to 60.
The polycarbonate diol and polycarbonate diol copolymer of the present invention preferably have a hydroxyl value of 35 to 600 mg KOH/g, more preferably 50 to 400 mg KOH/g. The polycarbonate diol including only repeating units represented by formula (1) preferably has a hydroxyl value of 150 to 400 mg KOH/g, more preferably 200 to 300 mg KOH/g. The polycarbonate diol including repeating units represented by formula (1) and repeating units represented by a formula other than formula (1) preferably has a hydroxyl value of 100 to 150 mg KOH/g, more preferably 110 to 130 mg KOH/g.
The polycarbonate diol and polycarbonate diol copolymer of the present invention preferably have an acid value of 1 mg KOH/g or less, more preferably 0.1 mg KOH/g or less, much more preferably 0.01 to 0.05 mg KOH/g.

The polycarbonate diol and polycarbonate diol copolymer of the present invention preferably have a melting point of - 100 to +250°C, more preferably -80 to +200°C, much more preferably -20 to +180°C, particularly preferably 0 to 180°C-The polycarbonate diol and polycarbonate diol copolymer of the present invention preferably have a glass transition point of -80 to +50°C. The polycarbonate diol including only repeating units represented by formula (1) preferably has a glass transition point of -50 to +50°C, more preferably -20 to 50°C. The polycarbonate diol including repeating units represented by formula (1) and repeating units represented by a formula other than formula (1) preferably has a glass transition point of -60 to +20°C, more preferably -55 to - 20°C.
The polycarbonate diol and polycarbonate diol copolymer of the present invention preferably have a viscosity of 10 to 10,000 cp (75°C), more preferably 50 to 5,000 cp (75°C), much more preferably 100 to 1,500 cp (75°C).

The polycarbonate diol copolymer may be produced through a known method such as the carbonate ester method or the phosgene method by reacting an aromatic diol compound and a diol compound different from the aromatic diol compound with, for example, a carbonate ester or phosgene. Among the aforementioned methods, the carbonate ester method is preferably employed.
The carbonate ester method employed is preferably, for example, the following production method B.
In production method B, as shown in the following reaction scheme, an aromatic dihydroxyl compound (a), a carbonate ester (b), and a diol compound (d) different from the aromatic diol compound (a) are reacted by transesterification with or without a catalyst, to thereby produce a polycarbonate diol copolymer (e).

Production method B will now be described by taking, as an example, the case where reaction is performed by using 1,4-benzenedimethanol as the aromatic dihydroxyl compound (a). However, the method may also be carried out in a manner similar to that described above by use of another aromatic dihydroxyl compound.
For the sake of simple description, the following reaction scheme of production method B corresponds to the case where the polycarbonate diol copolymer (e) has, in both terminals thereof, units derived only from the aromatic dihydroxyl compound (a). However, the terminal units of the copolymer are not limited to those derived from the aromatic dihydroxyl compound (a).

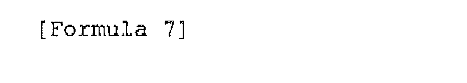

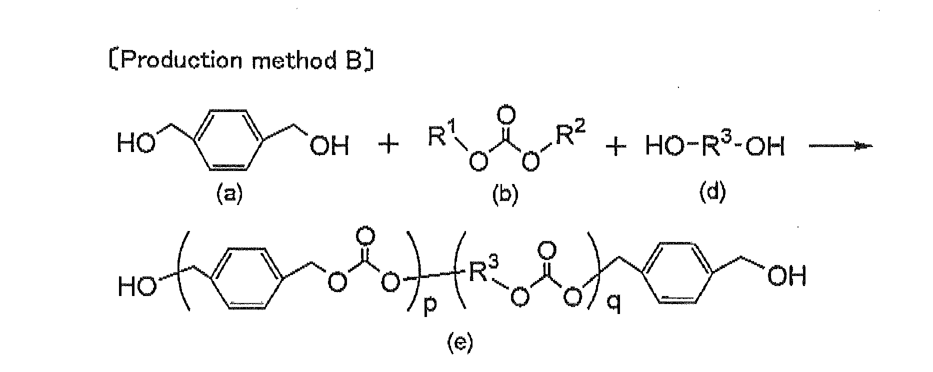

In the aforementioned reaction scheme of production method B, R¹, R², and R³ have the same meanings as defined above; p is preferably 1 to 20, more preferably 2 to 15; and q is preferably 1 to 30, more preferably 2 to 20.
In production method B, an alcohol derived from the carbonate ester (b) (e.g., R¹OH or R²OH) is by-produced during transesterification reaction. Therefore, preferably, reaction is allowed to proceed while the thus-produced alcohol is removed through, for example, distillation. In production method B, the carbonate ester (b) may be replaced with an alkylene carbonate such as ethylene carbonate. In this case, a glycol derived from such an alkylene carbonate is by-produced, and therefore, preferably, reaction is allowed to proceed while the thus-produced glycol is removed through, for example, distillation.

### (Aromatic dihydroxyl compound (a))

The aromatic dihydroxyl compound (a) employed in the present invention is represented by the following formula (4).

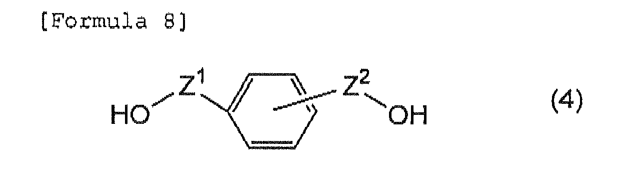

In formula (4), Z¹ and Z² have the same meanings as defined above; i.e., each of Z¹ and Z² represents a C1 to C10 linear or branched alkanediyl group. Specific examples of preferred alkanediyl groups are as described above. A C1 to C4 linear or branched alkanediyl group is preferably employed.
Preferably, Z¹ and Z² are located at 1,4-positions (p-form) or 1,3-positions (m-form), more preferably at 1,4-positions (p-form).
The aromatic dihydroxyl compound (a) is particularly preferably a compound having a C1 to C4 linear or branched alkanediyl group, such as 1,4-benzenedimethanol, 1,4-benzenediethanol, 1,4-benzenedipropanol, 1,4-benzenedibutanol, 1,3-benzenedimethanol, 1,3-benzenediethanol, 1,3-benzenedipropanol, 1,3-benzenedibutanol, 4-(4-hydroxymethylphenyl)butanol, or 3-[4-(2-hydroxyethyl)phenyl]propanol.

### (Carbonate ester (b))

No particular limitation is imposed on the carbonate ester (b) which may be employed in the present invention. However, preferably, the carbonate ester (b) is appropriately selected so that when an alcohol derived therefrom is by-produced, the alcohol can be effectively removed. Examples of the carbonate ester (b) include a dialkyl carbonate, a diaryl carbonate, and an alkylene carbonate.
The dialkyl carbonate is preferably a dialkyl carbonate having a C1 to C6 (preferably C1 to C4) alkyl group. Specific examples include dimethyl carbonate and diethyl carbonate.
Examples of the diaryl carbonate include diphenyl carbonate.
The alkylene carbonate is preferably an alkylene carbonate having a C2 to C4 alkanediyl group. Specific examples include ethylene carbonate, propylene carbonate, and butylene carbonate. Of these, a dialkyl carbonate having a C1 to C4 alkyl group is preferred, and dimethyl carbonate is particularly preferred, from the viewpoint of easy removal of a by-produced alcohol.

### (Diol compound (d))

The diol compound (d) which may be employed in the present invention is preferably, for example, a C3 to C20 alkanediol optionally having a substituent; a C3 to C20 diol having an alkenyl group including a branched carbon chain; a C3 to C20 diol having an alkenyl group including, in a carbon chain thereof, an alicyclic structure or an ether bond; or a C30 to C50 alicyclic and/or aromatic dimer diol optionally having a substituent.
Examples of the C3 to C20 (preferably C3 to C14) alkanediol include 1,3-propanediol, 1,4-butanediol, 1,5-pentanediol, 1,6-hexanediol, 1,7-pentanediol, 1,8-octanediol, 1,9-nonanediol, 1,10-decanediol, and 1,12-dodecanediol.
Examples of the diol having an alkenyl group including a branched carbon chain include 1,3-butanediol, 3-methylpentane-1,5-diol, 2-ethylhexane-1,6-diol, neopentyl glycol, and 2-methyl-1,8-octanediol.

Examples of the diol having an alkenyl group including, in a carbon chain thereof, an alicyclic structure include 1,3-cyclohexanediol, 1,4-cyclohexanediol, 2,2'-bis(4-hydroxycyclohexyl)propane, and 1,4-cyclohexanedimethanol.
Examples of the diol having an alkenyl group including, in a carbon chain thereof, an ether bond include diethylene glycol, triethylene glycol, tetraethylene glycol, polyethylene glycol, dipropylene glycol, polypropylene glycol, and polytetramethylene glycol.

The C30 to C50 alicyclic and/or aromatic dimer diol is preferably a C32 to C46 alicyclic and/or aromatic dimer diol. More specifically, the C30 to C50 alicyclic and/or aromatic dimer diol is preferably a compound mainly containing a C36 and/or C44 (preferably C36) alicyclic and/or aromatic dimer diol which corresponds to any of the following formulas (I) to (V) (hereinafter the compound may be referred to as "dimer diol (d-1)"). As used herein, "compound mainly containing an alicyclic and/or aromatic dimer diol" refers to a compound containing the alicyclic and/or aromatic dimer diol in an amount of 40 mol% or more, preferably 50 mol% or more, more preferably 60 mole% or more.

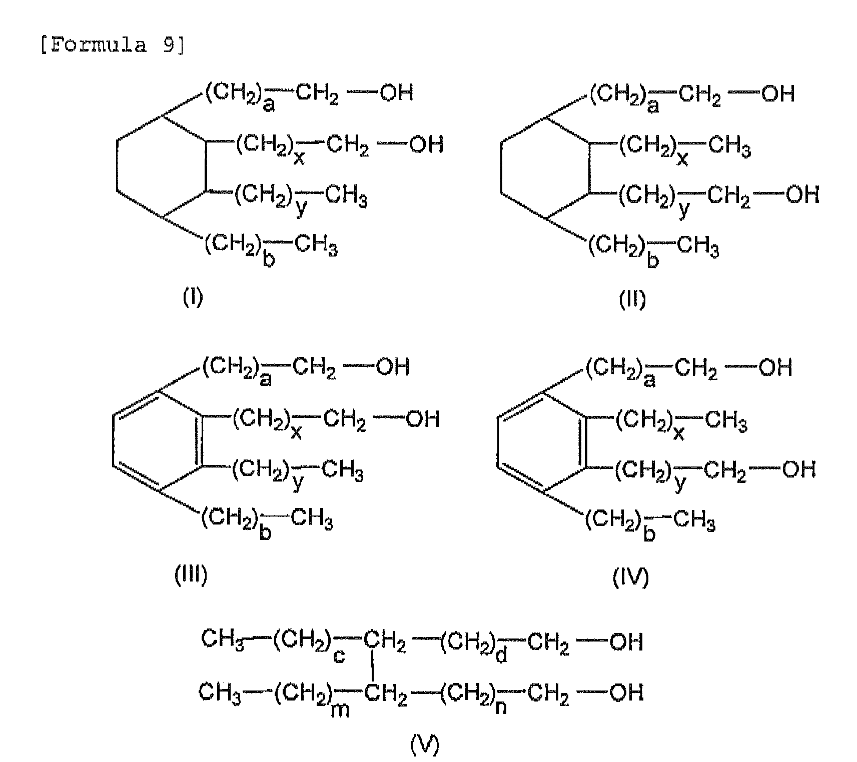

A compound represented by any of formulas (I) to (IV) preferably satisfies the following relations: a + b = 12 and (x + y) = 14, or (a + b) = 16 and (x + y) = 18. A compound represented by formula (V) preferably satisfies the following relations: (c + d) = 15 and (m + n) = 15, or (c + d) = 19 and (m + n) = 19.
A portion (95 mol% or less, preferably 50 mol% or less) of a compound corresponding to any of formulas (I) to (V) may be substituted by a C3 to C12 (preferably C5 to C12) aliphatic diol. Examples of the aliphatic diol which may be employed for substitution include pentane-1,5-diol, 3-methylpentane-1,5-diol, hexane-1,6-diol, heptane-1,7-diol, octane-1,8-diol, 2-methyloctane-1,8-diol, nonane-1,9-diol, decane-1,10-diol, and oligomers of ethylene oxide and propylene oxide (e.g., diethylene glycol, triethylene glycol, tetraethylene glycol, dipropylene glycol, and tetrapropylene glycol).
The dimer diol (d-1) may be produced by reducing both carboxyl groups of a hydrogenated dimer fatty acid to form hydroxyl groups. The dimer diol (d-1) is preferably employed in the form of a mixture of compounds produced upon reduction of a hydrogenated dimer fatty acid. The hydrogenated dimer fatty acid employed may be produced by dimerization of octadecadienoic acid with optional addition of octenoic acid (1 equivalent or less), and subsequent hydrogenation of the resultant product; or by dimerization of erucic acid (C₂₂) and subsequent hydrogenation of the resultant product (see, for example, Ullmanns Encyclopedia of Industrial Chemistry, Fifth Edition, Vol. A8, pp. 535-536).
Examples of commercial products of the dimer diol (d-1) include Pripol (registered trademark) series (products of CRODA International Plc), in particular, trade name: Pripol 2033 (i.e., a mixture of compounds corresponding to formulas (I) and (II) (about 50 mole%), compounds corresponding to formulas (III) and (IV) (about 20 mol%), and a compound corresponding to formula (V) (about 30 mol%)).

Among the aforementioned diol compounds (d), more preferred is a C4 to C8 (particularly C4 to C6) alkanediol (e.g., 1,4-butanediol, 1,5-pentanediol, or 1,6-hexanediol), a C5 to C8 aliphatic diol including an alicyclic structure (e.g., 1,4-cyrlohexanedimethanol), or a dimer diol mainly containing a C32 to C46 alicyclic and/or aromatic dimer diol (particularly dimer diol (d-1)), from the viewpoints of handling and easy availability.

### (Catalyst)

The catalyst employed in the present invention may be, for example, a catalyst generally used for transesterification reaction (i.e., transesterification catalyst). Examples of preferred catalysts include an alkali metal compound, an alkaline earth metal compound, an aluminum compound, a zinc compound, a manganese compound, a nickel compound, an antimony compound, a zirconium compound, a titanium compound, and an organotin compound.
Examples of the alkali metal compound include alkali metal hydroxides (e.g., lithium hydroxide, sodium hydroxide, and potassium hydroxide), alkali metal carbonates (e.g., lithium carbonate, sodium carbonate, and potassium carbonate), alkali metal carboxylates (e.g., lithium acetate, sodium acetate, and potassium acetate), and alkali metal alkoxides (e.g., lithium methoxide, sodium methoxide, and potassium t-butoxide). Examples of the alkaline earth metal compound include alkaline earth metal hydroxides (e.g., magnesium hydroxide) and alkaline earth metal alkoxides (e.g., magnesium methoxide).

Examples of the aluminum compound include aluminum alkoxides (e.g., aluminum ethoxide, aluminum isopropoxide, and aluminum sec-butoxide), and aluminum acetylacetonate.
Examples of the zinc compound include zinc carboxylates (e.g., zinc acetate) and zinc acetylacetonate. Examples of the manganese compound include manganese carboxylates (e.g., manganese acetate) and manganese acetylacetonate. Examples of the nickel compound include nickel carboxylates (e.g., nickel acetate) and nickel acetylacetonate.
Examples of the antimony compound include antimony carboxylates (e.g., antimony acetate) and antimony alkoxides. Examples of the zirconium compound include zirconium alkoxides (e.g., zirconium propoxide and zirconium butoxide) and zirconium acetylacetonate.

Examples of the titanium compound include titanium alkoxides (e.g., titanium tetraethoxide, titanium tatxapropoxide, titanium tetrabutoxide, tetracyclohexyl titanate, and tetrabenzyl titanate), titanium acylates (e.g., tributoxytitanium stearate and isopropoxytitanium stearate), and titanium chelates (e.g., diisopropoxytitanium bisacetylacetonate and dihydroxy-bislactatotitanium).
Examples of the organotin compound include dibutyltin oxide, dibutyltin diacetate, and dibutyltin dilaurate.
Each of the aforementioned carboxylates preferably has 2 to 30 carbon atoms, more preferably 2 to 18 carbon atoms. Each of the aforementioned alkoxides preferably has 1 to 30 alkoxy carbon atoms, more preferably 2 to 18 alkoxy carbon atoms.
Among the aforementioned catalysts, titanium compounds and organotin compounds are preferred, and titanium compounds are more preferred, with titanium alkoxides being much more preferred. Among titanium alkoxides, titanium tetraethoxide, titanium tetrapropoxide, and titanium tetrabutoxide are more preferred, with titanium tetrabutoxide being particularly preferred.
The aforementioned aromatic dihydroxyl compounds (a), carbonate esters (b), diol compounds (d), or catalysts may be employed singly or in combination of two or more species.

### (Transesterification reaction)

In the present invention, transesterification reaction may be carried out with or without a catalyst. However, from the viewpoint of reaction efficiency, transesterification is preferably performed in the presence of a catalyst.
The temperature or pressure employed in transesterification reaction may vary with the type of a carbonate ester (b) or diol compound (d) employed. Preferably, production method A is carried out under the conditions that an aromatic dihydroxyl compound (a) (e.g., 1,4-benzenedimethanol) is substantially not removed through distillation, whereas production method B is carried out under the conditions that an aromatic dihydroxyl compound (a) and a diol compound (d) are substantially not removed through distillation. The reaction temperature is preferably 90 to 230°C, and the reaction pressure is preferably atmospheric pressure to vacuum pressure (30 to 500 mmHg). Transesterification reaction may be carried out in an atmosphere or flow of air, carbon dioxide gas, or an inert gas (e.g., nitrogen, argon, or helium), but is preferably performed in an atmosphere or flow of an inert gas.
When a catalyst is employed, the amount thereof is determined as described below. In the case of production method A, from the viewpoint of reactivity, the amount (by weight) of a catalyst is preferably 1 to 20,000 ppm, more preferably 10 to 5,000 ppm, much more preferably 100 to 4,000 ppm, on the basis of the total amount of an aromatic dihydroxyl compound (a) and a carbonate ester (b) as determined upon initiation of reaction. Meanwhile, in the case of production method B, from the viewpoint of reactivity, the amount (by weight) of a catalyst is preferably 1 to 20,000 ppm, more preferably 10 to 5,000 ppm, much more preferably 100 to 4,000 ppm, on the basis of the total amount of an aromatic dihydroxyl compound (a), a carbonate ester (b), and a diol compound (d) as determined upon initiation of reaction.

In one embodiment, a polycarbonate diol copolymer (g) may be produced through transesterification reaction, in the presence or absence of a catalyst, between a high-molecular-weight polycarbonate diol which has been obtained through reaction between a diol compound (d) and a carbonate ester (b), and an aromatic dihydroxyl compound (a) (e.g., 1,4-benzenedimethanol).
In another embodiment, a polycarbonate diol copolymer (g) may be produced through transesterification reaction, in the presence or absence of a catalyst, between a high-molecular-weight polycarbonate diol which has been obtained through reaction between an aromatic dihydroxyl compound (a) (e.g., 1,4-benzenedimethanol) and a carbonate ester (b), and a diol compound (d).

The average molecular weight of the polycarbonate diol or polycarbonate diol copolymer of the present invention may be controlled by, for example, varying the proportions by mole of an aromatic dihydroxyl compound (a), a carbonate ester (b), and a diol compound (d) employed for transesterification reaction.
When the above-produced polycarbonate diol or polycarbonate diol copolymer has an average molecular weight lower than a target level, an aromatic dihydroxyl compound (a) and/or a diol compound (d) may be further removed through distillation under vacuum pressure, so that the polycarbonate diol or the polycarbonate diol copolymer has a target average molecular weight. In contrast, when the above-produced polycarbonate diol or polycarbonate diol copolymer has an average molecular weight higher than a target level, an aromatic dihydroxyl compound (a) and/or a diol compound (d) may be further added for transesterification reaction, so that the polycarbonate diol or the polycarbonate diol copolymer has a target average molecular weight.
The proportions by mole of repeating units forming the polycarbonate diol copolymer of the present invention may be controlled by, for example, varying the molar ratio of an aromatic dihydroxyl compound (a) to a diol compound (d). Examples

The present invention will next be described in more detail with reference to Examples and Referential Examples.
Properties of polycarbonate diols and polycarbonate diol copolymers were determined as described below.
(1) Hydroxyl value; measured according to the method B of JIS K 1557.
(2) Acid value: measured according to the indicator titration method of JIS K 1557.
(3) Water content: measured through coulometric titration method by means of a Karl Fischer moisture meter.
(4) Melting point, glass transition temperature: measured through differential scanning calorimetry (measurement temperature range: -100 to 200°C).
(5) Viscosity: measured at 75°C by means of an E-type viscometer.
(6) Hazen color number (APHA) (specified by JIS K 1557): measured according to JIS K 0071-1 as described below.

### (Preparation of standard solution)

Potassium chloroplatinate (1.245 g), cobalt chloride hexahydrate (1.000 g), water (500 mL), and hydrochloric acid (100 mL) are added to a 1L measuring flask. After complete dissolution, water is added to the flask until the liquid level reaches the marked line of the flask, to thereby prepare a solution. This solution corresponds to APHA standard solution No. 500, and various standard solutions are prepared by diluting the No. 500 standard solution with water. For example, APHA standard solution No. 100 is prepared by diluting the No. 500 standard solution (20.0 mL) with water (80.0 mL).

### (Measurement method)

There are provided colorless, transparent flat-bottomed glass colorimetric tubes made of the same material and having the same bottom thickness and the same diameter (inner diameter: about 23 mm), each colorimetric tube being equipped with a stopper and having a marked line at a specific level from the bottom such that the volume of a liquid whose level reaches the marked line is about 100 mL. A sample is added to any of the colorimetric tubes until the sample level reaches the marked line of the tube, so as not to allow air bubbles to enter the tube. Subsequently, the sample is juxtaposed with appropriate APHA standard solutions on a white plate, and these are compared with one another as viewed from above. A standard solution whose color is the closest to that of the sample is determined, and the standard solution No. is regarded as the APHA of the sample.

### Example 1 (Production of polycarbonate diol copolymer)

Dimethyl carbonate (199.3 g, 2.21 mol), 1,4-benzenedimethanol (65.2 g, 0.47 mol), 1,6-hexanediol (167.2 g, 1.41 mol), and titanium tetrabutoxide (0.03 g) were added to a 500 mL glass-made round-bottomed flask equipped with a fractionating column, a stirrer, a thermometer, and a nitrogen feed tube. Transesterification reaction was carried out for five hours at atmospheric pressure under stirring in a nitrogen flow, while a mixture of methanol and dimethyl carbonate was removed through distillation. During this reaction, the reaction temperature was gradually raised from 95°C to 200°C so that the composition of a distillate was identical or similar to the azeotropic composition of methanol and dimethyl carbonate.
Thereafter, the pressure was gradually reduced to 100 mmHg, and transesterification reaction was further carried out for four hours at 195°C under stirring, while a mixture of methanol and dimethyl carbonate was removed through distillation. After completion of reaction (i.e., completion of removal through distillation of methanol and dimethyl carbonate), the resultant reaction mixture was cooled to room temperature, to thereby produce 280 g of a polycarbonate diol copolymer.
The thus-produced polycarbonate diol copolymer was found to have a number average molecular weight of 950, an APHA of 40, a hydroxyl value of 118 mg KOH/g, an acid value of 0.02 mg KOH/g, a water content of 32 ppm, a melting point of 33°C, a glass transition point of -50.9°C, and a viscosity of 600 cp (75°C).

### Example 2 (Production of polycarbonate diol copolymer)

The procedure of Example 1 was repeated, except that dimethyl carbonate (185.3 g, 2.06 mol), 1,4-benzenedimethanol (183.3 g, 1.33 mol), 1,6-hexanediol (52.6 g, 0.44 mol), and titanium tetrabutoxide (0.03 g) were employed, to thereby produce 275 g of a polycarbonate diol copolymer.
The thus-produced polycarbonate diol copolymer was found to have a number average molecular weight of 1,017, an APHA of 50, a hydroxyl value of 110 mg KOH/g, an acid value of 0.02 mg KOH/g, a water content of 32 ppm, a melting point of 157°C, and a glass transition point of -23.6°C.

### Example 3 (Production of polycarbonate diol copolymer)

The procedure of Example 1 was repeated, except that dimethyl carbonate (170.2 g, 1.89 mol), 1,4-benzenedimethanol (109.9 g, 0.80 mol), 1,6-hexanediol (94.0 g, 0.80 mol), and titanium tetrabutoxide (0.02 g) were employed, to thereby produce 230 g of a polycarbonate diol copolymer.
1,4-Benzenedimethanol (2.78 g, 0.021 mol) and 1,6-hexanediol (2.38 g, 0.020 mol) were further added to the thus-produced polycarbonate diol copolymer, and transesterification reaction was carried out at 200 mmHg and 180°C, to thereby produce 235 g of a polycarbonate diol copolymer.
The thus-produced polycarbonate diol copolymer was found to have a number average molecular weight of 999, an APHA of 50, a hydroxyl value of 112 mg KOH/g, an acid value of 0.02 mg KOH/g, a water content of 26 ppm, a melting point of 120°C, and a glass transition point of -38.3°C.

### Example 4 (Production of polycarbonate diol copolymer)

Dimethyl carbonate (80.2 g, 0.89 mol), 1,4-benzenedimethanol (27.4 g, 0.19 mol), a dimer diol (trade name: Pripol 2033, product of CRODA International Plc, hydroxyl (OH) value: 202 mg KOH/g) (330.8 g, 0.60 mol), and titanium tetrabutoxide (0.04 g) were added to a 500 mL glass-made round-bottomed flask equipped with a fractionating column, a stirrer, a thermometer, and a nitrogen feed tube. Transesterification reaction was carried out for five hours at atmospheric pressure under stirring in a nitrogen flow, while a mixture of methanol and dimethyl carbonate was removed through distillation. During this reaction, the reaction temperature was gradually raised from 110°C to 200°C so that the composition of a distillate was identical or similar to the azeotropic composition of methanol and ' dimethyl carbonate.
Thereafter, the pressure was gradually reduced to 30 mmHg, and transesterification reaction was further carried out for five hours at 190°C under stirring, while a mixture of methanol and dimethyl carbonate was removed through distillation. After completion of reaction (i.e., completion of removal through distillation of methanol and dimethyl carbonate), the resultant reaction mixture was cooled to room temperature, to thereby produce 370 g of a polycarbonate diol copolymer. 1,4-Benzenedimethanol (2.66 g, 0.019 mol) and the dimer diol (32.0 g, 0.058 mol) were further added to the thus-produced polycarbonate diol copolymer, and transesterification reaction was carried out at 200 mmHg and 180°C for three hours, to thereby produce 405 g of a polycarbonate diol copolymer.
The thus-produced polycarbonate diol copolymer was found to have a number average molecular weight of 1,986, an APHA of 60, a hydroxyl value of 56.5 mg KOH/g, an acid value of 0.06 mg KOH/g, a water content of 64 ppm, a glass transition point of -49.5°c, and a viscosity of 1,533 cp (75°C).

### Example 5 (Production of polycarbonate diol)

Dimethyl carbonate (152.7 g, 1.70 mol), 1,4-benzenedimethanol (242.5 g, 7.76 mol), and titanium tetrabutoxide (0.04 g) were added to a 500 mL glass-made round-bottomed flask equipped with a fractionating column, a stirrer, a thermometer, and a nitrogen feed tube. Transesterification reaction was carried out for five hours at atmospheric pressure under stirring in a nitrogen flow, while a mixture of methanol and dimethyl carbonate was removed through distillation. During this reaction, the reaction temperature was gradually raised from 100°C to 200°C so that the composition of a distillate was identical or similar to the azeotropic composition of methanol and dimethyl carbonate.
Thereafter, the pressure was gradually reduced to 100 mmHg, and transesterification reaction was further carried out for five hours at 195°C under stirring, while a mixture of methanol and dimethyl carbonate was removed through distillation. After completion of reaction (i.e., completion of removal through distillation of methanol and dimethyl carbonate), the resultant reaction mixture was cooled to room temperature, to thereby produce 285 g of a polycarbonate diol.
The thus-produced polycarbonate diol was found to have a number average molecular weight of 492, an APHA of 50, a hydroxyl value of 228 mg KOH/g, an acid value of 0.02 mg KOH/g, a water content of 38 ppm, a melting point of 164°C, and a glass transition point of 36.6°C.

### Referential Example 1

Properties of a polycarbonate diol (trade name: ETERNACOLL (registered trademark) UM-90(1/3), product of Ube Industries, Ltd.), which is produced from 1,4-cyclohexanedimethanol, 1,6-hexanediol, and a carbonate ester (1,4-cyclohexanedimethanol : 1,6-hexanediol = 1 : 3 (by mole)), were determined in a manner similar to that described in the Examples. As a result, the polycarbonate diol was found to have a number average molecular weight of 894, an APHA of 50, a hydroxyl value of 125.5 mg KOH/g, an acid value of 0.04 mg KOH/g, a water content of 75 ppm, a glass transition point of -58.5°C, and a viscosity of 552 cp (80°C).

### Referential Example 2

Properties of a polycarbonate diol (trade name: ETERNACOLL (registered trademark) UM-90(3/1), product of Ube Industries, Ltd.), which is produced from 1,4-cyclohexanedimethanol, 1,6-hexanediol, and a carbonate ester (1,4-cyclohexanedimethanol ; 1,6-hexanediol = 3 : 1 (by mole)), were determined in a manner similar to that described in the Examples. As a result, the polycarbonate diol was found to have a number average molecular weight of 916, an APHA of 50, a hydroxyl value of 122.5 mg KOH/g, an acid value of 0.02 mg KOH/g, a water content of 168 ppm, a melting point of 50°C, a glass transition point of -33°C, and a viscosity of 4,854 cp (80°C).

### Referential Example 3

Properties of a polycarbonate diol (trade name: ETERNACOLL (registered trademark) UM-90(1/1), product of Ube Industries, Ltd.), which is produced from 1, 4-cyclohexanedimethanol, 1,6-hexanediol, and a carbonate ester (1,4-cyclohexanedimethanol : 1.6-hexanediol = 1 : 1 (by mole)), were determined in a manner similar to that described in the Examples. As a result, the polycarbonate diol was found to have a number average molecular weight of 914, an APHA of 50, a hydroxyl value of 122.7 mg KOH/g, an acid value of 0.03 mg KOH/g, a water content of 96 ppm, a glass transition point of -45.4°C, and a viscosity of 1,464 cp (80°C).

### Referential Example 4

Properties of a polycarbonate diol (trade name: ETERNACOLL (registered trademark) UH-100, product of Ube Industries, Ltd.), which is produced from 1,6-hexanediol and a carbonate ester, were determined in a manner similar to that described in the Examples. As a result, the polycarbonate diol was found to have a number average molecular weight of 1,018, an APHA of 15, a hydroxyl value of 110.9 mg KOH/g, an acid value of 0.03 mg KOH/g, a water content of 72 ppm, a melting point of 45°C, a glass transition point of -61.1°C, and a viscosity of 399 cp (75°C).

### Industrial Applicability

The polycarbonate diol and polycarbonate diol copolymer according to the present invention exhibit good mechanical performance, hydrolysis resistance, heat resistance, weatherability, and UV shielding property, which are intrinsic to polycarbonate diols. In addition, the polycarbonate diol and polycarbonate diol copolymer of the present invention are less likely to be colored and exhibit excellent industrial productivity. Therefore, when a polyurethane resin or a polycarbonate resin is produced from the polycarbonate diol of the present invention, the resultant resin exhibits excellent mechanical performance, heat resistance, weatherability, and UV shielding property, and thus is suitable for use in a variety of fields, including glass alternatives, adhesives, coating materials, and molded products.

## Claims

1. A polycarbonate diol including a repeating unit represented by the following formula (1): 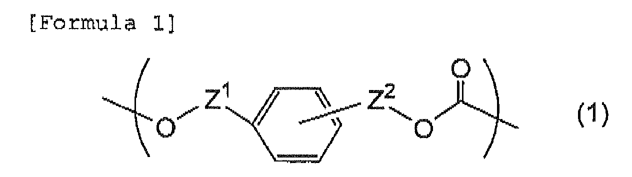 (wherein each of Z¹ and Z² represents a C1 to C10 linear or branched alkanediyl group).

2. A polycarbonate diol according to claim 1, wherein the repeating unit of formula (1) is represented by the following formula (2).

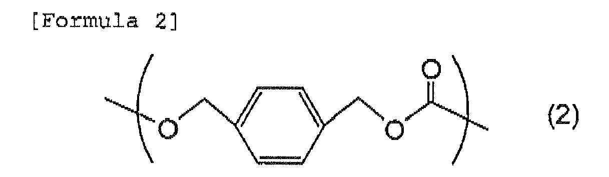

3. A polycarbonate diol copolymer including a repeating unit represented by the following formula (1) and a repeating unit represented by the following formula (3): 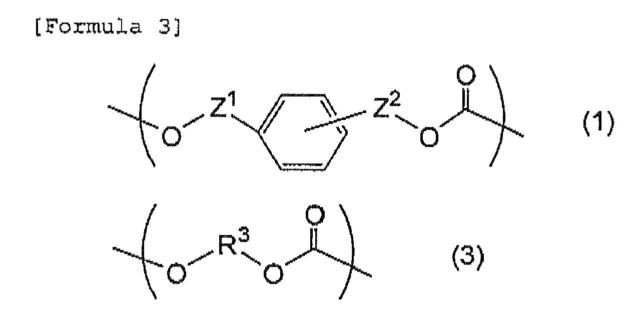 (wherein Z¹ and Z² have the same meanings as defined above; and R³ represents a C3 to C20 divalent aliphatic hydrocarbon group optionally having a substituent, or a C30 to C50 divalent alicyclic and/or aromatic hydrocarbon group optionally having a substituent, excepting the case where the repeating unit of formula (1) is identical to the repeating unit of formula (3)).

4. A polycarbonate diol copolymer according to claim 3, wherein the repeating unit of formula (1) is represented by the following formula (2).

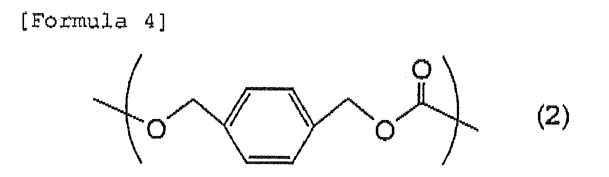

5. A polycarbonate diol copolymer according to claim 3 or 4, wherein the molar ratio of repeating units of formula (1) to repeating units of formula (3) is 1/9 to 9/1.
